# EUROPÄISCHE PATENTSCHRIFT

(11) **EP 4 168 487 B1**
(45) Veröffentlichungstag und Bekanntmachung des Hinweises auf die Patenterteilung: **10.04.2024**
(21) Anmeldenummer: 21729325.7
(22) Anmeldetag: 01.06.2021
(51) Int. Cl.: C09D 4/00, C08L 33/10, E01F 9/518, C08K 5/524, C08K 5/101, C08K 5/14

(54) **HÄRTUNG VON REAKTIONSHARZEN UNTER VERWENDUNG VON UNGESÄTTIGTEN PEROXIDEN ALS INITIATOR UND ORGANISCHEN PHOSPHITEN ALS BESCHLEUNIGER**
CURING OF REACTIVE RESINS USING UNSATURATED PEROXIDES AS INITIATOR AND ORGANIC PHOSPHITES AS ACCELERATORS
DURCISSEMENT DES RÉSINES RÉACTIVES À L'AIDE DES PEROXYDES NON SATURÉS EN TANT QU'INITIATEURS ET DES PHOSPHITES ORGANIQUES EN TANT QU'ACCÉLÉRATEURS

(30) Priorität: 23.06.2020 EP 20181562
(43) Veröffentlichungstag der Anmeldung: 26.04.2023
(73) Patentinhaber: Röhm GmbH, 64295 Darmstadt (DE)
(72) Erfinder: LOTZ, Janos, 63571 Gelnhausen (DE); KLEIN, Alexander, 55435 Gau-Algesheim (DE)
(74) Vertreter: Röhm Patent Association
(86) Internationale Anmeldenummer: PCT/EP2021/064600
(87) Internationale Veröffentlichungsnummer: WO 2021/259596

(56) Entgegenhaltungen:
- WO-A1-2012/146438
- DE-A1- 1 800 327
- DE-A1-102012 210 121

## Beschreibung

### Gebiet der Erfindung

Die vorliegende Erfindung betrifft neuartige Reaktionsharzformulierungen, z.B. zur Markierung von Fahrbahnen oder zur Beschichtung von Oberflächen, die gegenüber dem Stand der Technik über ein deutlich verbessertes Eigenschaftsprofil verfügen. So weisen die Reaktionsharze, vor allem basierend auf einem neuartigen Härtungssystem, eine verbesserte Kombination aus höherer Langzeitlagerstabilität, verbessertem toxikologischen Profil, verkürzter Aushärtezeit und geringer Vergilbungsneigung sowie einer besseren Farbechtheit auf.

An moderne Fahrbahnmarkierungen wird eine Reihe von Ansprüchen gestellt. Zum einen wird von solchen Systemen erwartet, dass sie eine einfache Applizierbarkeit auf der Straßenoberfläche und gleichzeitig hohe Lagerstabilität, sowie eine lange Lebensdauer der fertigen Markierung mit sich bringen. Auch von Bedeutung sind eine schnelle Verarbeitbarkeit und insbesondere eine Verarbeitbarkeit in einem möglichst breiten Temperaturfenster. Weiterhin wird verlangt, dass die verwendeten Reaktionsharze möglichst toxikologisch wenig bedenklich sind und bei deren Herstellung keine akut toxischen Rohstoffe gehandhabt werden müssen. Insbesondere sind dabei Reaktionsharze mit schneller Aushärtung bei möglichst geringem Gehalt an beschleunigenden Aminen gefordert. Von letzteren gehen einerseits Gefahren für die Gesundheit der Verarbeiter aus. Andererseits treten aber auch unerwünschte Nebeneffekte, wie z. B. Vergilbung der Beschichtungen unter UV-Einwirkung auf.

### Stand der Technik

Als Fahrbahnmarkierungsmaterialien werden zurzeit Systeme wie Lösungsmittel basierte Farben, Wasserfarben, thermoplastische Farben, Farben auf Basis von Reaktionsharzen sowie vorgefertigte Klebebänder eingesetzt. Letztere haben den Nachteil, dass sie aufwendig herzustellen und zu applizieren sind. Auch gibt es in Hinblick auf eine anzustrebende Langlebigkeit der Markierung nur eingeschränkte Freiheitsgrade bezüglich der Ausgestaltung der Markierung, z.B. mit Glasperlen.

Thermoplastische Überzüge, die im geschmolzenen Zustand auf der Fahrbahnoberfläche aufgebracht werden, können an sich auch auf eine hohe Aushärtungsgeschwindigkeit optimiert werden. Ihre Verwendung hat den großen Nachteil eines zusätzlichen Verfahrensschrittes, indem das Produkt erst, z.B. bei 200 °C zum Schmelzen gebracht werden muss, bevor es appliziert werden kann. Dies ist nicht nur wegen der hohen Temperatur potentiell gefährlich, sondern thermoplastische Systeme weisen an sich einen erhöhten Abrieb und eine verminderte thermische Belastbarkeit auf. Thermoplastische Systeme sind oft deutlich kurzlebiger als Systeme, die z.B. auf Reaktionsharzen basieren und unter Vernetzung reagieren.

Ein etabliertes System zur Markierung von Straßen bzw. zur Bodenbeschichtung sind so genannte Reaktionsharze. Dabei handelt es sich in der Regel um 2-K-Systeme, die Monomere, Polymere und weitere Komponenten wie z.B. Füllstoffe, Hilfsstoffe oder Glasperlen aufweisen. In der einen Komponente der 2-K-Systeme ist dabei eine Initiatorkomponente enthalten und in der zweiten Komponente ein Beschleuniger. Vor der Applikation werden diese beiden Komponenten miteinander vermischt und innerhalb einer Topfzeit auf der Straße bzw. dem Fußboden appliziert. Dabei ist eine richtige Kombination aus einem Initiator und einem dazu passenden Beschleuniger von großer Bedeutung. Bei ungeeigneten Kombinationen kommt es zu entweder zu kurzen Topfzeiten mit einer zu starken Aushärtung vor der Applikation oder zu langen Aushärtezeiten mit einer sehr späten und zumeist unvollständigen Aushärtung der Beschichtung.

Reaktionsharze werden dazu nach ihrer Herstellung oftmals über weite Wegstrecken transportiert. Insbesondere im internationalen Seetransport kommt es dabei zu langen Transportdauern. Die Harze werden in der Regel auch nicht direkt nach ihrer Herstellung angewendet und müssen deshalb über längere Zeit ausreichend lagerstabil sein. Eine ausreichende Lagerstabilität von Reaktionsharzen, auch bei höheren Temperaturen, ist vorteilhaft, um die Anforderungen bei Lagerung und Transport gering zu halten, wie beispielsweise einen temperaturkontrollierten Transport oder eine Lagerung in gekühlten Lagerräumen. Auch unter Sicherheitsaspekten ist eine hohe Lagerstabilität wünschenswert, um eine unkontrollierte Polymerisation bei der Herstellung und Lagerung zu vermeiden.

Als Initiatoren werden für kalthärtende Systeme die bei Umgebungstemperaturen, wie sie bei Außenanwendungen z.B. auf Straßen oder Dächern vorherrschen, in der Regel Peroxide, wie z.B. Dibenzoylperoxid, verwendet. Dibenzoylperoxid ist ökotoxikologisch jedoch aufgrund seiner Schädlichkeit für Wasserorganismen mit langfristiger Wirkung bedenklich.

Als Beschleuniger werden in kalthärtenden Systemen üblicherweise tertiäre aromatische Amine wie z.B. N,N-Dimethyl-p-toluidin, N,N-bis-(2-Hydroxyethyl)-p-toluidin oder N,N-bis-(2-Hydroxypropyl)-p-toluidin verwendet. Auch solche aromatischen Amine sind toxikologisch bedenklich.

Solche Komponenten aufweisende Reaktionsharze zur Beschichtung von Straßenoberflächen sind beispielsweise in WO 2011/091908 beschrieben. DE 102012210121A1 beschreibt asymmetrische aromatische Amine als Beschleuniger, welche toxikologisch unbedenklicher sind. Bei den beschriebenen Systemen lässt sich die für aromatische Amine typische Vergilbung nicht vollständig vermeiden. Dieser Effekt ist für Beschichtungen und insbesondere Straßenmarkierungen unerwünscht.

Ein Ansatz zur verbesserten Aushärtung und gleichzeitig zur Ermöglichung geringerer Gelbwerte ist die Entwicklung neuer Aushärtesysteme ohne die Verwendung aromatischer Amine. US 3,639,370 beschreibt Trialkylphosphite mit einer Kettenlänge von 1 bis 6 Kohlenstoffatomen und Triarylphosphite zur Aktivierung von Permaleinaten. Kurzkettige Trialkylphosphite und insbesondere die bevorzugt zur Aktivierung beschriebene Verbindung Triethylphosphit sind aufgrund niedriger Geruchsschwelle jedoch selbst in geringen Konzentrationen extrem übelriechend, sodass der Einsatz in Reaktionsharzen bei atmosphärisch offener Verarbeitung problematisch ist. Weiterhin zeigen die in US 3,639,370 offenbarten kurzkettigen Trialkylphosphite zur Aktivierung von Permaleinaten ebenfalls den gewichtigen Nachteil, dass diese in einer sehr kurzen Zeitdauer zu einer Gelierung des Reaktionsharzes führen und damit nur eine äußerst kurze Verarbeitungszeit zur Verfügung steht. Eine zu kurze Verarbeitungszeit führt in der Praxis zu einer schlechten Applizierbarkeit, da die Härtung bzw. Polymerisation des Reaktionsharzes zu früh Eintritt. Im Beispiel 47 der US 3,639,370 wird eine Gelzeit von 1 min und eine Zeitdauer von 7 min bis zur Erreichung des Temperaturmaximums bei der Aushärtung bei der Verwendung von Triethylphosphit genannt. Hieraus folgt, das die Aushärtezeit mehr als 7 Minuten beträgt. Angesichts der sehr kurzen Gelzeit ist eine manuelle Verarbeitung dieser Systeme in der Praxis nicht möglich. Selbst für maschinelle Verlegung, z.B. im Spritzverfahren, stellen extrem kurze Topfzeiten eine Herausforderung dar, weil bei Unterbrechung nur sehr kurze Zeit zur Reinigung von kontaminierten Maschinenteilen verbleibt. In US 3,639,370 werden darüber hinaus weitere Verbindungen zur Aktivierung von Permaleinaten beschrieben, welche allerdings toxikologisch bedenklich und zum Teil kanzerogen sind und überwiegend einen unangenehmen Geruch aufweisen.

WO 2012/146438 A1 offenbart wiederum ein Beschleunigersystem, welches eine Kombination von Permaleinaten mit Zink-, Schwefel- und Phosphorverbindungen zur Härtung von (Meth)acrylatharzen in dünnen Schichten aufweist. Dieses Härtungssystem hat jedoch den großen Nachteil, dass die entsprechenden Reaktionsharze nur über eine kurze Topfzeiten bzw. Verarbeitungszeiten und gleichzeitig eine relativ lange Aushärtezeit, die bis zu einer klebfreien Oberfläche benötigt wird, verfügen. Im Beispiel 15 der WO 2012/146438 wird eine Gelzeit von 3 min und eine Aushärtezeit von 35 min angeführt. Dies erlaubt in der Praxis wiederum nur eine maschinelle Verarbeitung, z.B. im Spritzverfahren zur Markierung von Straßen. Gegenüber herkömmlichen Kaltspritzplastiksystem mit BPO/Amin-Härtungssystem, mit typischen Aushärtezeiten von unter 10 Minuten, ist das in WO 2012/146438 offenbarte System deutlich langsamer in Bezug auf eine vollständige Aushärtung. Damit sind entsprechende Beschichtungen erst später überrollbar, was eine längere Absperrzeit des Verkehrs bei Markierungsarbeiten mit sich bringt.

### Aufgaben

Aufgabe der vorliegenden Erfindung war es im Hinblick auf den diskutierten Stand der Technik die Bereitstellung eines neuen Reaktionsharzes, das gegenüber dem Stand der Technik für Mensch und Umwelt weniger Gefahren aufweist. Dies bedeutet insbesondere, dass die eingesetzten Aktivatoren bzw. Beschleuniger humantoxikologisch weniger bedenklich und die eingesetzten Initiatoren weniger toxisch für Wasserorganismen sein sollen.

Darüber hinaus war es Aufgabe der vorliegenden Erfindung, ein Reaktionsharz zur Verfügung zu stellen, welches gegenüber dem Stand der Technik über eine ausreichende Topfzeit verfügt, und somit zu einer Beschichtung führt, die sowohl maschinell mit zeitnaher Überrollbarkeit, sowie als auch manuell verarbeitet werden kann. Insbesondere soll dabei die Aushärtezeit maximal das Fünffache der Topfzeit betragen. Hierdurch wird die Beschichtung hinreichend schnell mechanisch belastbar, sodass beispielsweise eine frisch aufgetragene Straßenmarkierung zeitnah durch den Verkehr überrollbar ist.

Darüber hinaus war es Aufgabe, dass das Reaktionsharz insbesondere auch bei kühleren Anwendungstemperaturen, d.h. beispielsweise im Bereich zwischen 5°C und 25°C und auch im Kontakt mit Sauerstoff, bzw. Luft eingesetzt werden kann und dabei klebfrei aushärtet.

Darüber hinaus bestand die Aufgabe, solche Reaktionsharze zur Verfügung zu stellen, die nach dem Applizieren in geeigneter Zusammensetzung, insbesondere unter UV-Bewitterung über einen längeren Zeitraum nahezu keine Verfärbung wie z.B. ein Vergilben aufweisen.

Darüber hinaus sollten die neu zu entwickelnden 2K-Reaktionsharze gegenüber aus dem Stand der Technik bekannten 2K-Reaktionsharzen mit z.B. einem Härtersystem auf Basis von Dibenzoylperoxid und Aminen, als Fahrbahnmarkierung appliziert, über vergleichbare mechanische Eigenschaften bei ebenfalls vergleichbarer Dauerhaftigkeit aufweisen. Für eine technisch einfache Herstellung und Verarbeitung der Reaktionsharze soll insbesondere die Beschleunigerkomponente bei Raumtemperatur flüssig sein, sodass ein einfaches Einmischen in ein Reaktionsharz möglich ist. Bei niedrigen Temperaturen lassen sich so Reaktionsharze nach Bedarf kurz vor der Anwendung, z.B. auf einer Baustelle, durch Zusatz von weiteren Beschleuniger zusätzlich aktivieren.

Die Anwendung der neu entwickelten Reaktionsharze beschränkt sich dabei nicht nur auf Fahrbahnmarkierungen, sondern auch auf andere Anwendungsgebiete, wie beispielsweise Reaktivbeschichtungen und Reaktivabdichtungen, wie Dach- und Brückenabdichtungen, Fußbodenbeschichtungen, Korrosionsschutz, Intumeszenzbeschichtungen, aber auch Reaktionsharzmassen für beispielsweise Kunststein, Polymerbeton, Sanitärobjekte oder aber auch Dental- oder Orthopädieharze oder Knochenzement, sowie Reaktionsharzmassen für Klebstoffe. Weitere nicht explizit genannte Aufgaben ergeben sich aus dem Gesamtzusammenhang der nachfolgenden Beschreibung, Ansprüche und Beispiele.

### Lösung

Die Aufgaben werden gelöst durch die Bereitstellung eines neuartigen 2-K-Reaktionsharzsystems, wie in den Ansprüchen definiert, welches in einer Komponente mindestens ein organisches Phosphit, aufweisend mindestens eine gegenüber dem Stand der Technik längere Alkylgruppe als Beschleuniger und in der anderen Komponente ein ungesättigtes Peroxid als Initiator enthält.

Dabei enthalten die beiden Komponenten des 2K-Reaktionsharzes auf (Meth)acrylatbasis erfindungsgemäß zusammen folgende Inhaltsstoffe:
0 Gew% bis 30 Gew% Vernetzer,
20 Gew% bis 85 Gew% Monomere,
0 Gew% bis 60 Gew% Urethan(meth)acrylate,
0 Gew% bis 40 Gew% Präpolymere,
gegebenenfalls weitere Hilfsstoffe und
1,15 Gew% bis 10 Gew% eines Härtersystems enthaltend
0,15 Gew bis 5 Gew% Permaleinate und
1,0 Gew% bis 10 Gew% eines tertiären organischen Phosphit.

Dabei beziehen sich die Mengenangaben zum Permaleinat und zu den tertiären organischen Phosphiten auf die Gesamtmenge des 2K-Reaktionsharzes.

Das oder die Permaleinate einerseits und das tertiäre organische Phosphit andererseits sind dabei vor dem Zusammenmischen der beiden Komponenten in getrennten Komponenten des 2K-Reaktionsharzes enthalten.

Weiterhin zeichnet sich das erfindungsgemäße 2K-Reaktionsharz dadurch aus, dass das tertiäre organische Phosphit die allgemeine Formel P(OR1)(OR2)(OR3) hat, wobei es sich bei R1, R2 und R3 um identische oder um zueinander unterschiedliche Gruppen handelt und mindestens eine dieser Gruppen mehr als 6 C-Atome aufweist.

Wenn Vernetzer vorliegen, werden diese bevorzugt in einer Mindestkonzentration von 0,5 Gew% eingesetzt.

Bevorzugt ist dabei eine Zusammensetzung, in der die beiden Komponenten zusammen folgende Inhaltsstoffe aufweist:
2 Gew% bis 20 Gew%, besonders bevorzugt 3 Gew% bis 15 Gew% Vernetzer, bevorzugt mehrfunktionelle (Meth)acrylate, ganz besonders bevorzugt di-, tri- oder tetra-(Meth)acrylate, 25 Gew% bis 75 Gew%, besonders bevorzugt 30 bis 40 Gew% (Meth)acrylate und/oder mit (Meth)acrylaten copolymerisierbare Monomere, wobei der Anteil an Acrylaten maximal 5 Gew% des 2K-Reaktionsharzes ausmacht,
0 Gew% bis 45 Gew%, besonders bevorzugt bis 30 Gew% Urethan(meth)acrylate,
10 Gew% bis 35 Gew%, besonders bevorzugt 15 Gew% bis 25 Gew% Präpolymere, bevorzugt Poly(meth)acrylate und/oder Polyester, besonders bevorzugt Poly(meth)acrylate gegebenenfalls weitere Hilfsstoffe und
2 Gew% bis 7,5 Gew%, besonders bevorzugt 2 Gew% bis 7 Gew% eines Härtersystems,
enthaltend bezogen auf das 2K-Reaktionsharz 0,5 Gew bis 4,0 Gew%, besonders bevorzugt 0,75 Gew bis 3,5 Gew% Permaleinate und
1,5 Gew% bis 6,0 Gew%, besonders bevorzugt 2,0 Gew% bis 5,0 Gew% eines tertiären organischen Phosphits, als Inhaltsstoffe aufweist.

Bei den weiteren Hilfsstoffen kann es sich z.B. um Stabilisatoren, Inhibitoren, Regler oder Wachse handeln. Bevorzugt ist das erfindungsgemäße Reaktionsharz halogenfrei.

Bei dem Permaleinat handelt es sich bevorzugt um tert-Butylmonoperoxomaleinsäureester.

In einer besonderen Ausführungsform der vorliegenden Erfindung handelt es sich bei den 2K-Reaktionsharzen um solche, die einen besonders hohen Anteil Urethan(meth)acrylate aufweisen. Solche 2K-reaktionsharze weisen bevorzugt in beiden Komponenten des Reaktionsharzes zusammen
0 Gew% bis 20 Gew% mehrfunktionelle (Meth)acrylate,
25 Gew% bis 75 Gew% (Meth)acrylate und/oder mit (Meth)acrylaten copolymerisierbare Monomere, wobei der Anteil an Acrylaten maximal 5 Gew% des 2K-Reaktionsharzes ausmacht,
10 Gew% bis 60 Gew% Urethan(meth)acrylate,
10 Gew% bis 35 Gew% Präpolymere,
gegebenenfalls weitere Hilfsstoffe und
2,0 Gew% bis 7,5 Gew% eines Härtersystems, enthaltend bezogen auf das 2K-Reaktionsharz 0,5 Gew bis 4,0 Gew% Permaleinate und
1,5 Gew% bis 6,0 Gew% eines tertiären organischen Phosphits, als Inhaltsstoffe auf.

Überraschend wurde gefunden, dass mittels eines organischen Phosphits die Aktivierungsreaktion gegenüber Systemen nach Stand der Technik so weit beschleunigt werden, dass eine Härtung auch bei 5°C und darunter noch erfolgt. Weiterhin wird die Härtung derart stark beschleunigt, dass kürzere Aushärtungszeiten realisiert werden.

Bei dem organischen tertiären Phosphit werden Alkyl, Aryl, Alkoxyaryl, Alkoxyalkyl, sowie heterozyklische tertiäre Phosphite und tertiäre Thiophosphite mit der Formel P(XR1)(XR2)(XR3) eingesetzt. Bei R1, R2 und R3 handelt es sich dabei identisch zueinander oder sich voneinander unterscheidend um Alkyl-, Cycloalkyl-, Aryl-, Alkoxyalkyl-, Arylalkyl- or Tetrahydrofurfuryl-Gruppen. Bei X kann es sich um Sauerstoff oder Schwefel handeln.

Typische Beispiele für solche erfindungsgemäß eingesetzten tertiären Phosphite bzw. Thiophosphite sind Tri-2-ethylhexylphosphit, Tri-2-ethylhexyltrithiophosphit, Triisooctylphosphit, Triisooctyltrithiophosphit, Tridecylphosphit, Tridecyltrithiophosphit, Trilaurylphosphit, Trilauryltrithiophosphit, Trioctadecylphosphit, Trioctadecyltrithiophosphit, Phenyldidecylphosphit, Phenyldidecyltrithiophosphit, Phenyldilaurylphosphit, Phenyldistearylphosphit, Phenyldistearyltrithiophosphite, Diphenyldecylphosphit, Diphenyllaurylphosphit, Diphenylstearylphosphit, Diphenylstearyltrithiophosphit, Tri-para-kresylphosphit, Tri-metakresylphosphit, Tri-ortho-kresylphosphite, Tri-para-Kresyldithiophosphit, Tri-paraoctylphenyltrithiophosphit, Tri-ortho-octylphenylphosphit, Tris(dipropyleneglycol)phosphit,Triethoxyethylphosphit, Tributoxyethylphosphit, Tritetrahydrofurfurylphosphit, Tritetrahydrofurfuryltrithiophosphit, Triphenylethylphosphit, S-Phenyldilaurylmonothiophosphit, S-Phenyldidecylmonothiophosphit, SS-Diphenyllauryldithiophosphit, SS-Diphenyldecyldithiophosphit, Tri-ortho-naphthylphosphit, , S.S.-diphenyldecyl dithiophosphite, phenyldilaury trithiophos phite, trip-dodecylphenyl phosphite, triochlorophenyl phosphite, diphenyllauryl trithiophosphite, S-Iauryldiphenyl monothiophosphite, tri p-methoxyphenyl phosphite, S.O-diphenyl-S- lauryl dithiophosphite, trio-methoxyphenyl dithiophos. phite, SS-dilauryl phenyl dithiophosphite, and SO-dilauryl-S-phenyl dithiophosphite,

Bei den tertiären organischen Phosphiten handelt es sich bevorzugt um Verbindungen mit drei identischen Alkylgruppen R1, R2 und R3, wobei entsprechend alle drei Alkylgruppen mehr als 6 C-Atome aufweisen. Ein besonders bevorzugtes Beispiel für das tertiäre organische Phosphit ist Triisodecylphosphit.

Zusätzlich kann das erfindungsgemäße Reaktionsharz weitere Beschleuniger, zum Beispiel in Form von symmetrischen tertiären, aromatischen Aminen, wie sie aus dem Stand der Technik bekannt sind, enthalten. In einer solchen Ausführungsform der Erfindung bewirkt die Zugabe eine zusätzliche Beschleunigung des Reaktionsharzes und gegenüber dem Stand der Technik verkürzte Aushärtezeit. Als besagte symmetrische tertiäre, aromatische Amine seien zum Beispiel N,N-Dimethyl-p-toluidin, N,N-bis-(2-Hydroxyethyl)-p-toluidin oder N,N-bis-(2-Hydroxypropyl)-p-toluidin genannt.

Bevorzugt sind jedoch Ausführungsformen, in denen ausschließlich organische Phosphite als Beschleuniger verwendet werden und das 2K-Reaktionsharz entsprechend in Summe kein Amin aufweist. Überraschend wurde gefunden, dass Reaktionsharze mit einem zum Stand der Technik ohne das Vorhandensein von Amin mit vergleichbarer Geschwindigkeit zu etablierten Systemen ausgehärtet werden können. Damit ist die Formulierung insgesamt aus toxikologischer Sicht deutlich unkritischer als Systeme des Standes der Technik.

Bevorzugt enthält das erfindungsgemäße 2K-Reaktionsharz weniger als 5 Gew%, besonders bevorzugt keine Acrylate.

Das erfindungsgemäße 2K-Reaktionsharz kann in verschiedenen Ausführungsformen zur Verfügung gestellt werden. In einer ersten solchen Ausführungsform besteht die zweite Komponente des Reaktionsharzes ausschließlich aus Bestandteilen des Härtersystems. Diese sind dann nicht in der ersten Komponente des 2K-Reaktionsharzes enthalten. In einer solchen Ausführungsform wird beispielsweise der Beschleuniger vor der Vermischung und Applikation zu den übrigen Komponenten, enthaltend den Initiator, gegeben. Alternativ kann entsprechend der Initiator zu einem den Beschleuniger enthaltenden, ansonsten vollständig formulierten Reaktionsharz gegeben werden.

In einer weiteren Ausführungsform sind die erste und die zweite Komponente des Reaktionsharzes mit Ausnahme der Bestandteile des Härtersystems identisch zusammengesetzt. In diesem Fall werden vor der Applizieren die beiden Einzelkomponente, enthaltend einerseits den Initiator, andererseits den Beschleuniger, miteinander vermischt.

Weitere Ausführungsformen, z.B. aufgeteilt auf mehr als zwei Komponenten, sind weiterhin denkbar.

Als sehr günstig hat es sich erwiesen, wenn das erfindungsgemäße 2K-Reaktionsharz zusätzlich 0,3 Gew% bis 3 Gew% eines oder mehrerer Paraffine enthält. Diese Paraffine zeichnen sich dabei dadurch aus, dass deren Erstarrungspunkt nach DIN-ISO 2207 im Temperaturbereich von 35 °C bis 75 °C liegt.

Überraschend wurde darüber hinaus gefunden, dass Ausführungsformen des erfindungsgemäßen 2K-Reaktionsharzes dann besonders vorteilhaft eingesetzt werden können, wenn das 2K-Reaktionsharz bezogen auf die Summe aus Acrylat- und Methacrylatgruppen maximal 5 Gew% Acrylat-Gruppen enthält. In dieser Betrachtung werden somit nicht nur die polymerisierbaren Acrylat- und Methacrylatanteile der Monomere berücksichtigt, sondern auch weitere Gruppen, wie sie insbesondere in den Vernetzern bzw. den Urethan(meth)acrylaten enthalten sind bzw. sein können.

Neben den beschriebenen 2K-Reaktionsharzen sind insbesondere auch mit diesen 2K-Reaktionsharzen hergestellte Kaltplastiken Teil der vorliegenden Erfindung. Diese Kaltplastiken weisen dabei folgende Komponenten auf:
Diese erfindungsgemäße Kaltplastik kann beispielsweise als Fahrbahnmarkierung, Abdichtung oder Bodenbeschichtung verwendet werden. Insbesondere ist sie dadurch gekennzeichnet, dass die Kaltplastik
5 Gew% bis 80 Gew%, bevorzugt 10 Gew% bis 60 Gew% des 2K-Reaktionsharzes gemäß vorangegangener Beschreibung,
0,15 Gew% bis 25 Gew%, bevorzugt 1 Gew% bis 20 Gew% und besonders bevorzugt 1,5 Gew% bis 15 Gew% eines oder mehrerer Pigment, bevorzugt anorganische Pigmente, insbesondere bevorzugt Titandioxid,
15 Gew% bis 90 Gew% anorganische bzw. mineralische Füllstoffe,
0 Gew% bis 5 Gew%, bevorzugt 0,3 Gew% bis 3 Gew% nicht im 2K-Reaktionsharz enthaltene weitere Stabilisatoren und/oder Additive und
0 Gew% bis 90 Gew% organische, bevorzugt polymere Füllstoffe als Bestandteile aufweist.

Bevorzugt macht die Gesamtsumme der Füllstoffe dabei 50 Gew% bis 80 Gew% der Kaltplastik aus.

Die Komponenten der Kaltplastik werden bei der Verwendung zur Markierung von Fahrbahnoberflächen vor oder während dem Auftragen auf der Fahrbahnoberfläche gemischt. Bei anderen Verwendungen erfolgt das Mischen der Komponenten entsprechend kurz vor oder während des Gießens, Beschichtens oder Füllens. Dabei kann die Endformulierung der Kaltplastik und das Vermischen der Einzelkomponenten des 2K-Reaktionsharzes beispielsweise simultan erfolgen.

Überraschend wurde gefunden, dass als Straßenmarkierung applizierte erfindungsgemäße Kaltplastiken eine besonders schnelle Wiederbefahrbarkeit aufweisen. Unter dem Begriff Überrollbarkeit bzw. dem synonym verwendeten Begriff Wiederbefahrbarkeit wird eine Belastung der Fahrbahnmarkierung, z.B. in Form des Überrollens durch Fahrzeuge, verstanden. Die Zeitspanne bis zur Erreichung einer Überrollbarkeit ist die Zeitspanne zwischen dem Auftragen der Fahrbahnmarkierung bis zu dem Zeitpunkt, an dem die Markierungsmasse nicht mehr durch Reifenüberrollung auf die Fahrbahn verschleppt wird.

### Detaillierte Beschreibung der Komponenten der Kaltplastik bzw. des Reaktionsharzes

Zusätzlich kann die Kaltplastik oder Kaltspritzplastik weitere Hilfsstoffe wie Netz- und/oder Dispergiermittel, einen griffigen, die Rutschfestigkeit verbessernden Füllstoff und Antiabsetzmittel enthalten. Auch können Glaskugeln zur Verbesserung der Reflexion zugesetzt werden, bzw. bereits in einer Komponente der Kaltplastik enthalten sein. Alternativ können die Glaskugeln nach der Applikation auf der Oberfläche aufgetragen werden. Bei diesem Vorgehen, zum Beispiel angewendet mit modernen Markierungsfahrzeugen mit einer zweiten Düse, werden die Kugeln direkt nach dem Auftrag der ersten beiden Komponenten auf diese aufgespritzt. Vorteil bei diesem Vorgehen ist, dass nur der Teil der Glaskugeln, der in die Markierungsmatrix eingebettet ist, mit den Bestandteilen der anderen beiden Komponenten benetzt ist und man erhält optimale Reflexionseigenschaften. Ganz besonders bei Anwendung dieser Technologie ist jedoch eine besonders gute Einbettung der Glasperlen und eine entsprechend gute Haftung der Markierungsmatrix, bzw. der Fahrbahnmarkierungsformulierung an der Oberfläche der Glaskugeln wichtig. Überraschend wurde gefunden, dass das erfindungsgemäße Reaktionsharz, bzw. die Kaltspritzplastik, dieses Reaktionsharz enthaltend, diese geforderten Eigenschaften mindestens auf dem Niveau des Standes der Technik erfüllt. Genaue geregelt sind die geforderten Eigenschaften an eine Straßenmarkierung in DIN EN 1436.

Um die geforderten Eigenschaften weiter zu verbessern, können die Glaskugeln mit Haftvermittlern zusammen aufgetragen oder mit diesen vorher behandelt werden. Somit sind die Retroreflektionseigenschaften und die Tages- bzw. Nachtsichtbarkeit der erfindungsgemäßen Kaltplastik mit dem Stand der Technik zumindest vergleichbar. Entsprechendes gilt für die Langlebigkeit, insbesondere der Einbettung der Glasperlen.

Als Initiatoren werden bei dem neuartigen Härtungssystem ungesättigte Peroxide eingesetzt, insbesondere tert-Butylpermaleinat. Unter Umständen kann es vorteilhaft sein, ein Gemisch verschiedener Initiatoren einzusetzen. In der Regel ist das Peroxid in der zweiten Komponente mit einem Verdünnungsmittel, wie einem Öl oder einem Weichmacher, versetzt. Die zuvor angegebenen Konzentrationen in der erfindungsgemäßen Reaktionsharzen beziehen sich jedoch nur auf den reinen Initiator.

Ein optionaler Bestandteil des erfindungsgemäßen Reaktionsharzes sind die Vernetzer. Insbesondere mehrfunktionelle Methacrylate wie Allyl(meth)acrylat. Besonders bevorzugt sind di- oder tri-(Meth)acrylate wie beispielsweise 1,4-Butandioldi(meth)acrylat, Poly(urethan)(meth)acrylate Tetraethylenglycoldi(meth)acrylat, Triethylenglycoldi(meth)acrylat oder Trimethylolpropantri(meth)acrylat.

Unter den optional enthaltenen Urethan(meth)acrylaten versteht man im Rahmen dieser Erfindung Verbindungen, die (Meth)acrylat-Funktionalitäten aufweisen, die über Urethangruppen miteinander verknüpft sind. Sie sind durch die Umsetzung von Hydroxyalkyl(meth)acrylaten mit Polyisocyanaten und Polyoxyalkylenen, die mindestens zwei Hydoxyfunktionalitäten aufweisen, erhältlich. Anstelle von Hydroxyalkyl(meth)acrylaten können auch Ester der (Meth)acrylsäure mit Oxiranen, wie beispielsweise Ethylen- oder Propylenoxid, oder entsprechenden Oligo- bzw. Polyoxiranen verwendet werden. Einen Überblick beispielsweise über Urethan(meth)acrylate mit einer Funktionalität größer zwei findet man in DE 199 02 685. Ein kommerziell erhältliches Beispiel hergestellt aus Polyolen, Isocyanaten und hydroxyfunktionellen (Meth)acrylaten ist EBECRYL 210-5129 der Allnex. Urethan(meth)acrylate erhöhen in einem Reaktionsharz, ohne größere Temperaturabhängigkeit, die Flexibilität, die Reißfestigkeit und die Reißdehnung. Überraschend wurde gefunden, dass selbst Urethanacrylate mit dem neuen Härtungssystem in höheren Gewichtsanteilen problemlos klebfrei aushärten. Dies eröffnet die Möglichkeit unter weitgehendem Verzicht auf Acrylatmonomere mit typischerweise niedriger Glasübergangstemperatur flexible Reaktionsharze herzustellen, wie sie für z. B. Fahrbahnmarkierungen oder Abdichtungssysteme benötigt werden.

Bei den in dem Reaktionsharz enthaltenden Monomeren handelt es sich insbesondere um Verbindungen, die ausgewählt sind aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, 2-Ethylhexyl(meth)acrylat, Stearyl-(meth)acrylat, Lauryl(meth)acrylat; Aryl(meth)acrylate wie zum Beispiel Benzyl(meth)acrylat; Mono(meth)acrylate von Ethern, Polyethylenglycolen, Polypropylenglycolen oder deren Mischungen mit 5 bis 80 C-Atomen, wie beispielsweise Tetrahydrofurfury(lmeth)acrylat, Methoxy(m)ethoxyethyl(meth)acrylat, Benzyloxymethyl(meth)acrylat, 1-Ethoxybutyl(meth)acrylat, 1-Ethoxyethyl(meth)acrylat, Ethoxymethyl(meth)acrylat, Poly(ethylenglycol)methylether(meth)acrylat und Poly(propylenglycol)-methylether(meth)acrylat, zusammen.

Die Gruppe der (Meth)acrylate umfasst auch Ester der (Meth)acrylsäure mit einem Acetal, Ketal oder Carbonat von Glycerin, substituiertem Glycerin oder Trimethylolpropan bzw. substituierten Trimethylolpropan.

Bevorzugte Beispiele für solche Monomere sind Glycerinformal(meth)acrylat, Trimethylolpropan-formal-(meth)acrylat oder Isopropylidenglycerin(meth)acrylat (Solketal-methacrylat).

Überraschenderweise wurde gefunden, dass die erfindungsgemäße Reaktionsharzzusammensetzung bevorzugt maximal bis zu 5 Gew% Acrylatmonomere bezogen auf das 2k-Reaktionsharz enthält. Damit lassen sich kurze Aushärtezeiten im Verhältnis zur Topfzeit erreichen. In einer ganz besonders bevorzugten Ausführungsform enthält das 2-K Reaktionsharz keine Acrylatmonomere.

Als Bestandteile von Monomergemischen eignen sich auch zusätzliche Monomere mit einer weiteren funktionellen Gruppe, wie a,ß-ungesättigte Mono- oder Dicarbonsäuren, beispielsweise Acrylsäure, Methacrylsäure oder Itaconsäure; Ester der Acrylsäure oder Methacrylsäure mit zweiwertigen Alkoholen, beispielsweise Hydroxyethyl(meth)acrylat oder Hydroxypropyl(meth)acrylat; Acrylamid oder Methacrylamid; oder Dimethylaminoethyl(meth)acrylat. Weitere geeignete Bestandteile von Monomergemischen sind beispielsweise Glycidyl(meth)acrylat oder silylfunktionelle (Meth)acrylate.

Neben diesen (Meth)acrylaten können die Monomergemische auch weitere ungesättigte Monomere aufweisen, die mit den zuvor genannten (Meth)acrylaten und mittels freiradikalischer Polymerisation copolymerisierbar sind. Hierzu gehören unter anderem 1-Alkene oder Styrole. Im Einzelnen wird das Poly(meth)acrylat nach Anteil und Zusammensetzung zweckmäßigerweise im Hinblick auf die gewünschte technische Funktion gewählt werden.

In sogenannten MO-PO-Systemen liegen neben den aufgeführten Monomeren auch Polymere, zur besseren Unterscheidbarkeit im Rahmen dieses Schutzrechtes als Präpolymer bezeichnet, bevorzugt Polyester oder Poly(meth)acrylate vor. Diese werden zur Verbesserung der Polymerisationseigenschaften, der mechanischen Eigenschaften, der Haftung zum Untergrund sowie der optischen Anforderungen an die Harze eingesetzt. Da in bevorzugten Ausführungsformen nur geringe Anteile and Acrylatmonomere mit niedriger Glasübergangstemperatur zur Flexibilisierung der Reaktionsharze eingesetzt werden, können für diesen Zweck neben Methacrylatmonomere mit entsprechender Glasübergangstemperatur auch Präpolymere mit niedriger Glasübergangstemperatur eingesetzt werden, wobei die Präpolymere selbst wiederum aus Acrylatmonomeren zusammengesetzt sein können.

Sowohl die Polyester als auch die Poly(meth)acrylate können zusätzliche funktionelle Gruppen zur Haftvermittlung oder zur Copolymerisation in der Vernetzungsreaktion, wie beispielsweise in Form von Doppelbindungen, aufweisen. Bevorzugt, in Hinblick auf eine bessere Farbstabilität der Fahrbahnmarkierung, weisen die Präpolymere jedoch keine Doppelbindungen auf. Besagte Poly(meth)acrylate sind im Allgemeinen aus den gleichen Monomeren zusammengesetzt, wie sie bereits bezüglich der Monomere im Harzsystem aufgelistet wurden. Sie können durch Lösungs-, Emulsions-, Suspensions-, Substanz- oder Fällungspolymerisation gewonnen werden und werden dem System als Reinstoff zugesetzt. Besagte Polyester werden in Substanz via Polykondensation oder ringöffnende Polymerisation gewonnen und setzen sich aus den für diese Anwendungen bekannten Bausteinen zusammen.

Als Hilfs- und Zusatzstoffe können zusätzlich Regler, Weichmacher, Paraffine, Stabilisatoren, Inhibitoren, Wachse und/oder Öle eingesetzt werden. Die Paraffine werden zugesetzt, um eine Inhibierung der Polymerisation durch den Sauerstoff der Luft zu verhindern. Dazu können mehrere Paraffine mit unterschiedlichen Schmelzpunkten in unterschiedlichen Konzentrationen verwendet werden. Als sehr günstig hat es sich erwiesen, wenn das erfindungsgemäße 2K-Reaktionsharz zusätzlich 0,3 Gew% bis 3 Gew% eines oder mehrerer Paraffine enthält. Diese Paraffine zeichnen sich dabei dadurch aus, dass deren Erstarrungspunkt nach DIN-ISO 2207 im Temperaturbereich von 35 °C bis 75 °C liegt.

Als Regler können alle aus der radikalischen Polymerisation bekannten Verbindungen verwendet werden. Bevorzugt werden Mercaptane wie n-Dodecylmercaptan eingesetzt. Als Weichmacher werden vorzugsweise Ester, Polyole, Öle, niedermolekulare Polyether oder Phthalate eingesetzt.

Ebenso können UV-Stabilisatoren eingesetzt werden. Vorzugsweise werden die UV-Stabilisatoren ausgewählt aus der Gruppe der Benzophenonderivate, Benzotriazolderivate,
Thioxanthonatderivate, Piperidinolcarbonsäureesterderivate oder Zimtsäureesterderivate. Aus der Gruppe der Stabilisatoren bzw. Inhibitoren werden vorzugsweise substituierte Phenole, Hydrochinonderivate eingesetzt.

Folgende Komponenten können optional auch in dem 2K-Reaktiosnharz oder der Kaltplastik bzw. in auf den erfindungsgemäßen 2K-reaktionsharzen basierenden anderen Endformulierungen enthalten sein:
Netz-, Dispergier- und Verlaufshilfsmittel werden vorzugsweise ausgewählt aus der Gruppe der Alkohole, Kohlenwasserstoffe, Glycolderivate, Derivate von Glycolsäureestern, Essigsäureestern und Polysiloxanen, Polyether, Polysiloxane, Polycarbonsäuren, gesättigte und ungesättigte Polycarbonsäureaminamide eingesetzt.

Als Rheologieadditive werden vorzugsweise Polyhydroxycarbonsäureamide, Harnstoffderivate, Salze ungesättigter Carbonsäureester, Alkylamoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet. Es wurde gefunden, dass Rheologieadditive auf Basis pyrogener oder gefällter, optional auch silanisierter, Kieselsäuren mit einer BET-Oberfläche von 10 bis 700 nm²/g besonders geeignet sind. Entschäumer werden vorzugsweise ausgewählt aus der Gruppe der Alkohole, Kohlenwasserstoffe, paraffinbasischen Mineralöle, Glycolderivate, Derivate von Glycolsäureestern, Essigsäureestern und Polysiloxanen eingesetzt.

Für die in der Kaltplastik zusätzlich eingesetzten Hilfs- und Zusatzstoffen kann es sich um analoge Komponenten handeln.

Wie bereits ausgeführt, können den Kaltplastiken, verwendbar beispielsweise zur Fahrbahnmarkierung, zusätzlich Farbstoffe, Glasperlen, Fein- und Grobfüllstoffe, Netz-, Dispergier- und Verlaufshilfsmittel, UV-Stabilisatoren, Entschäumer und Rheologieadditive zugesetzt werden. Für das Einsatzgebiet der Formulierungen als Fahrbahnmarkierungen, wie beispielsweise Linien, Balken oder Symbole, oder Flächenmarkierungen für die Kennzeichnung von z.B. Radwegen oder Busspuren oder Parkplätzen werden als Hilfs- und Zusatzstoffe vorzugsweise Farbstoffe zugegeben. Besonders bevorzugt sind weiße, rote, blaue, grüne und gelbe anorganische Pigmente, besonders bevorzugt sind weiße Pigmente wie Titandioxid.

Glasperlen werden vorzugsweise in Formulierungen für Fahrbahnmarkierungen und Flächenmarkierungen als Reflexionsmittel eingesetzt. Die eingesetzten handelsüblichen Glasperlen haben Durchmesser von 10 µm bis 2000 µm, bevorzugt 50 µm bis 800 µm. Die Glasperlen können zur besseren Verarbeitung und Haftung mit einem Haftvermittler versehen werden. Bevorzugt können die Glasperlen silanisiert werden.

Zudem können den Kaltplastiken ein oder mehrere mineralische Feinfüllstoffe und Grobfüllstoffe zugesetzt werden. Diese Materialien dienen auch als Rutschhemmer und werden daher insbesondere zur Griffverbesserung und zur zusätzlichen Färbung der Fahrbahnmarkierung eingesetzt. Feinfüllstoffe werden aus der Gruppe der Calciumcarbonate, Bariumsulfate, Quarze, Quarzmehle, gefällten und pyrogenen Kieselsäuren, Pigmente und Cristobalite sowie Korund eingesetzt. Als Grobfüllstoffe werden Quarze, Cristobalite, Korunde und Aluminiumsilikate eingesetzt.

Die erfindungsgemäßen 2K-Reaktionsharze ermöglichen derart hohe Formulierungsfreiheiten, dass die erfindungsgemäßen 2K-Reaktionsharze bzw. die erfindungsgemäßen Kaltplastiken/Kaltspritzplastiken, das Reaktionsharz enthaltend, genauso formulierbar und additivierbar sind, wie eine etablierte Systeme des Standes der Technik. Somit sind auch die Abriebfestigkeit, die Langlebigkeit, der Weißgrad, die Pigmentierung und die Griffigkeit mindestens so gut wie bei Systemen des Standes der Technik.

Zumindest die Vergleichbarkeit mit dem Stand der Technik gilt entsprechend auch bezüglich der Lagerstabilität des Reaktionsharzes. Auch kann das System bezüglich des zu beschichtenden Untergrunds, mittels Wahl geeigneter Monomere, Präpolymere und/oder Haftvermittler, optimiert werden. Die erfindungsgemäßen Systeme sind entsprechend variabel optimierbar für die Markierung von Asphalt-, Beton- oder Natursteinoberflächen.

### Verwendung der Reaktionsharze bzw. Kaltplastiken/ Kaltspritzplastiken

Neben den beschriebenen erfindungsgemäßen 2K-Reaktionsharzen und den Kaltplastiken diese enthaltend, ist auch ein Verfahren zur Applizierung eines 2K-Reaktionsharzes Bestandteil der vorliegenden Erfindung. Dieses Verfahren ist dadurch gekennzeichnet, dass die beiden Komponenten eines erfindungsgemäßen 2K-Reaktionsharzes innerhalb von 2 min bis 40 min vor oder während dem Auftragen auf einem Substrat miteinander vermischt werden. Dabei ist die Formulierung "Auftragen auf einem Substrat" breit auszulegen. Sie umfasst damit nicht nur z.B. die Beschichtung von Oberflächen, sondern auch Tätigkeiten wie das Befüllen von Formen.

Dabei kann es sich bei dem Substrat insbesondere um eine Fahrbahnoberfläche, Pflastersteine, Beton, Estrich, Asphalt, Keramik oder Stahl, insbesondere in Form eines Stahlträgers, handeln.

Das erfindungsgemäße 2-K Reaktionsharz ermöglicht weiterhin die Herstellung von vergilbungsfreien Kunststeinformkörpern bei Umgebungstemperatur z. B. die Herstellung von Sanitärobjekten in unbeheizten Gussformen.

Bevorzugt werden die erfindungsgemäßen 2K-Reaktionsharze, bzw. Kaltplastiken, diese Reaktionsharze enthaltend, zur Straßenmarkierung, insbesondere zur Herstellung von langlebigen Fahrbahnmarkierungen, oder zur Beschichtung von Fußböden oder Abdichtungen, insbesondere im industriellen oder gewerblichen Bereich eingesetzt. Diese Auflistung ist jedoch nicht dazu geeignet, die Anwendung der erfindungsgemäßen Reaktionsharze bzw. Kaltplastiken in irgendeiner Form einzuschränken.

Auch bezüglich der Applikationstechnologie sind die erfindungsgemäßen Systeme flexibel einsetzbar. Die erfindungsgemäßen Reaktionsharze, bzw. Kaltplastiken können z.B. sowohl im Sprüh-, im Gieß- als auch im Extrusionsverfahren bzw. manuell mittels einer Kelle, einer Rolle oder einem Rakel aufgetragen werden.

Die einzelnen Komponenten der Kaltplastik wie z.B. das erfindungsgemäße 2K-Reaktionsharz können vor, nach oder während der Weiterverarbeitung, wie z.B. dem Auftragen auf einer Fahrbahnoberfläche, gemischt werden. Etabliert ist ein Einmischen vor der Weiterverarbeitung, wobei darauf zu achten ist, dass nach dem Einmischen der Härterkomponente eine nur limitierte offene Zeit, z.B. von 2 oder 40 min, zum Applizieren verbleibt. Ein Mischen während des Verarbeitens ist zum Beispiel in modernen Markierungsmaschinen, die über eine der Auftragsdüse vorgeschaltete Mischkammer verfügen, möglich. Ein Einmischen des Härters nach dem Auftragen kann z.B. durch ein nachfolgendes Auftragen mit zwei oder mehr Düsen erfolgen oder durch auftragen von Glaskugeln, welche mit Härter beschichtet sind. Alternativ kann eine Grundierung enthaltend die Härterkomponente vorgesprüht werden bevor die Kaltplastik oder Kaltspritzplastik aufgetragen wird.

Darüber hinaus sind die mechanischen Eigenschaften der mit den erfindungsgemäßen 2K-Reaktionsharzen hergestellten Fahrbahnmarkierung in einem typischen Bereich zwischen 200 µm und 7000 µm, unabhängig von der Auftragsdicke, ausgezeichnet. Die Auftragsdicke der erfindungsgemäßen Kaltplastik bzw. Kaltspritzplastik liegt bevorzugt zwischen 400 µm und 1000 µm und besonders bevorzugt zwischen 600 µm und 800 µm. Dünnere und dickere Schichten sind ja nach Anwendung möglich.

Bevorzugt werden die erfindungsgemäßen 2K-Reaktionsharze bzw. die daraus hergestellten Kaltplastiken zur Herstellung von langlebigen Fahrbahnmarkierungen verwendet.

Beispielsweise werden die 2K-Reaktionsharze bzw. Kaltplastiken in einem Verfahren angewandt, bei dem vor, während oder direkt nach der Aufbringung der Kaltplastik auf einer Fahrbahnoberfläche Glaskugeln zugegeben werden.

Alternativ können die erfindungsgemäßen Reaktionsharze und/oder Kaltplastiken auch in anderen technischen Gebieten Anwendung finden. Beispiele dafür sind Fußbodenbeläge, bevorzugt für industrielle Anwendungen, zur Herstellung von Gussteilen, zur Abdichtung oder Beschichtung von Dächern, Brücken oder deren Fugen, insbesondere als Abdichtungsmembran, zur Brückenbeschichtung allgemein, als Abdichtungsmembran auf Dächern, zur Herstellung von Platten, z.B. zur Weiterverwendung als Arbeitsplatte, zur Herstellung von Schutzbeschichtungen insbesondere für Metalloberflächen, als Kanalharz, zur Herstellung von Sanitärobjekten, zur Herstellung von Klebstoffen, zur Rissverfüllung z.B. in Gebäuden, oder zur Verwendung im Bereich der Orthopädie.

### Beispiele

Die im Folgenden aufgeführten Beispiele werden zur besseren Veranschaulichung der vorliegenden Erfindung gegeben, sind jedoch dabei nicht dazu geeignet, die Erfindung auf die hierin offenbarten Merkmale zu beschränken.

Als Härter wurde ein Gemisch aus tert-Butyl-peroxomaleinat und Weichmachern, Phlegmatisierern und weiteren Hilfsmitteln, das einen Peroxidanteil von ca. 25 Gew% aufweist, verwendet. Insbesondere wurde in den folgenden Beispielen - wenn nicht anders angegeben - PEROXAN PM-25 S der Firma Pergan eingesetzt.

Als Topfzeit wurde diejenige Zeit ermittelt, die das Material nach Einrühren des Härters benötigt, um nach dem Mischen der Komponenten des 2K-Reaktionsharzes von Raumtemperatur, also einer Temperatur zwischen 20 und 22 °C, auf 32 °C zu erwärmen. Dazu wurde eine Probenmenge des 2K-Reaktionsharzes von 20 g in einem Kunststoffgefäß zusammengemischt.

Bei dem sogenannten O-Test wurde diejenige Zeit ermittelt, welche benötigt wird um eine klebfreie Oberfläche zu erzielen. Hierzu wurde mit dem Einrühren des Härters in das Material die Zeit gestartet und nach dem vollständigen Einmischen des Härters das Gemisch in einer Schichtstärke von 2 mm in einen Weißblechdeckel gegossen. Im Anschluss wurde diejenige Zeitdauer gestoppt, bei der die Oberfläche bei Berührung mit Handschuh-bewehrten Finger nicht mehr klebt. Alle Tests wurden vom gleichen Operator durchgeführt.

### Härtung von Reaktionsharzen auf Methacrylatbasis

### Vergleichsbeispiel 1

In diesem Vergleichsbeispiel wurde die Härtung von eines 2K-Reaktionsharzes auf Methacrylatbasis mit Benzoylperoxid/ N,N'-Dihydroxyethyl-p-Toluidin -Härtersystem gemäß Stand der Technik durchgeführt.

98,5 g DEGADUR MDP Membrane SG (kommerziell erhältliches, beschleunigerfreies Reaktionsharz auf Methacrylatbasis, Firma Röhm GmbH) wurden mit 1,50 g N,N'-Dihydroxyethyl-p-Toluidin vermischt. Zur Härtung wurden anschließend 2,0 g Perkadox CH-50 (Dibenzoylperoxidpulver 50% mit Dicyclohexylphthalat, Firma Nouryon) zugegeben und solange gerührt, bis sich das zugegebene Peroxid im Reaktionsharz vollständig aufgelöst hatte.

Daraus wurden folgende Ergebnisse ermittelt:
Topfzeit: 11 min
Tₘₐₓ = 119 °C
Tₘₐₓ nach 17 min
O-Test = 23 min

Nach 24 h wurde die Farbe des 2 mm dicken Polymerfilms aus dem O-Test auf einem weißen Untergrund visuell bewertet. Es war eine deutliche Gelbfärbung erkennbar.

### Beispiel 1

In diesem erfindungsgemäßen Beispiel erfolgt die Härtung eines entsprechenden 2K-Reaktionsharzes mit einem Härtersystem auf Basis von TBPM (tert-Butylpermaleinat) und einem Phosphit.

98,0 g DEGADUR MDP Membrane SG wurden mit 2,00 g Tris(2-ethylhexyl)phosphit vermischt. Zur Härtung wurden anschließend 4,0 g PEROXAN PM-25 S (25 gew%ige TBPM-Suspension von tert-Butylpermaleinat mit Weichmacher der Firma Pergan) zugegeben und solange gerührt, bis sich das zugegebene Peroxid im Reaktionsharz vollständig aufgelöst hatte.

Daraus wurden folgende Ergebnisse ermittelt:
Topfzeit = 10 min
Tₘₐₓ = 129 °C
Tₘₐₓ nach 15 min
O-Test = 20 min

Nach 24 h wurde die Farbe des 2 mm dicken Polymerfilms aus dem O-Test auf einem weißen Untergrund visuell bewertet. Es war keine Gelbfärbung erkennbar.

Der Vergleich der jeweiligen Ergebnisse aus Vergleichsbeispiel 1 und Beispiel 1 zeigt, dass das erfindungsgemäße Reaktionsharz über vergleichbare Topf- und Härtezeiten verfügt, jedoch keine Gelbfärbung des Polymers hervorruft.

### Beispiele 2 bis 4

Die Härtung von 2K-Reaktionsharzen dieser erfindungsgemäßen Beispiele mit TBPM/Phosphit-Härtersystemen erfolgte wie folgt:
DEGADUR MDP Membrane SG wurde jeweils mit Triisodecylphosphit als Beschleuniger vermischt. Anschließen wurde das Reaktionsharz in einen Klimaschrank zur Temperierung gegeben. Nach Einstellung der Temperatur anschließend wurde zur Härtung PEROXAN PM-25 S zugegeben und solange gerührt, bis sich das zugegebene Peroxid im Reaktionsharz vollständig aufgelöst hatte. Die Härtung des Reaktionsharzes erfolgte ebenfalls in einem Klimaschrank. Die Außentemperatur, die jeweiligen Mischungsverhältnisse sowie die Messergebnisse sind in Tabelle 1 wiedergegeben:

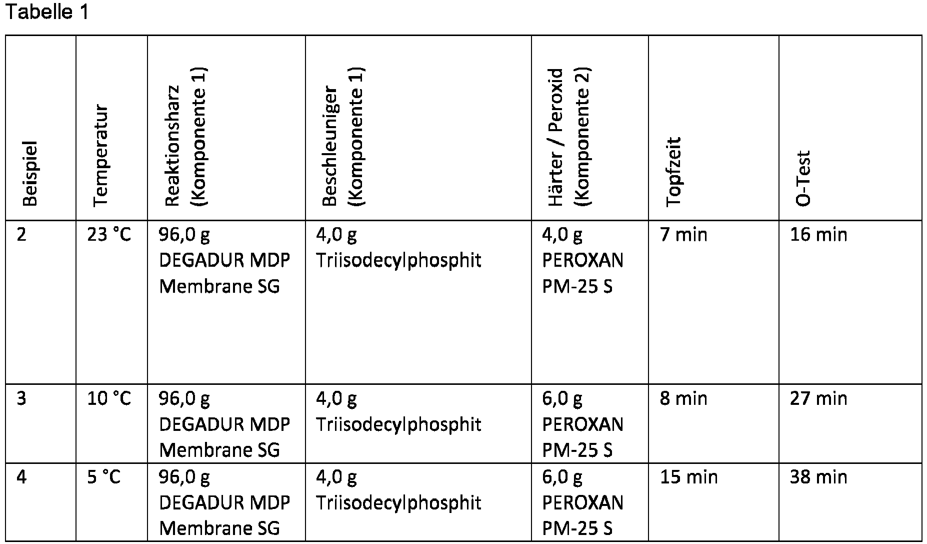

Mit Beispielen 2 bis 4 konnte gezeigt werden, dass mit der Verwendung des erfindungsgemäßen 2K-Reaktionsharzes durch Anpassung der Härtermenge auch über einem weiten Temperaturbereich, bis hin zu tiefen Temperaturen, eine vollständige, klebfreie Aushärtung in kurzer Zeit, mit für die Verarbeitungspraxis ausreichend langer Topfzeit ermöglicht wird.

### Härtung von Reaktionsharzen, enthaltend Methacrylate und Acrylate

Im Folgenden soll der Einfluss von Acrylaten in Reaktionsharzen auf das Härtungsverhalten untersucht werden.

In Beispielen 5 bis 12 wurde jeweils DEGADUR MDP Primer SG B (kommerziell erhältliches, Aminfreies Reaktionsharz auf Methacrylatbasis, Firma Röhm GmbH, enthält 0,5 Gew% Triisodecylphosphit) wurden mit verschiedenen Mengen 2-Ethylhexylacrylat und zusätzlichen Triisodecylphosphit als Beschleuniger vermischt. Zur Härtung wurden anschließend PEROXAN PM-25 S (Tert-Butylpermaleinat, 25%, Suspension mit Weichmacher, Firma Pergan) zugegeben und solange gerührt, bis sich das zugegebene Peroxid im Reaktionsharz vollständig aufgelöst hatte. Die jeweiligen Mischungsverhältnisse sowie die Messergebnisse der Beispiele 5 bis 8 sind in Tabelle 2 wiedergegeben.

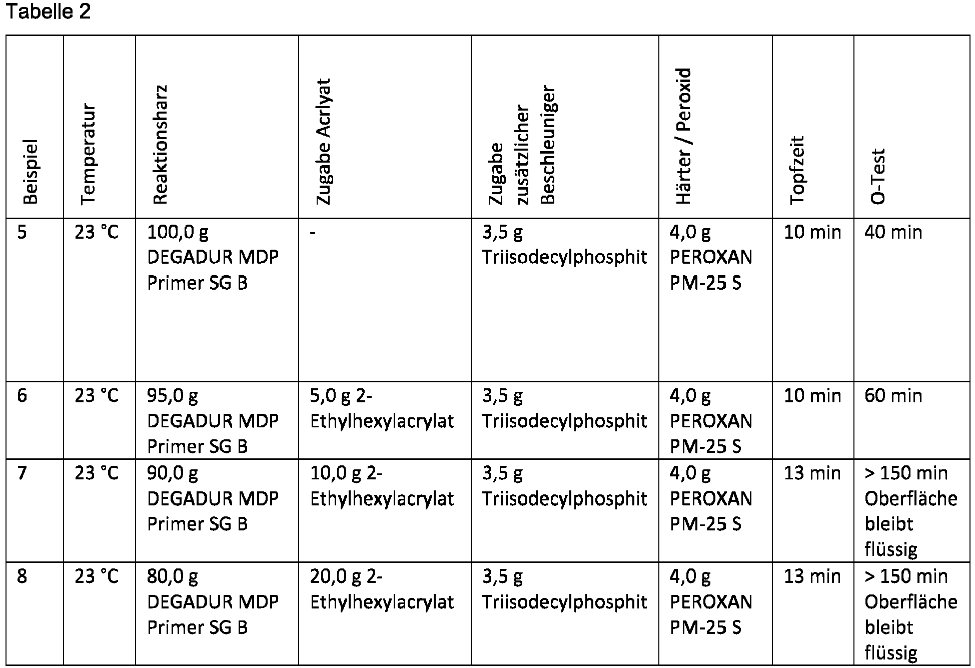

Mit den Beispielen 5 bis 8 wird gezeigt, dass mit höherem Gewichtsanteil an Acrylatmonomeren die Härtungseigenschaften schlechter werden. Somit ist eine höherer Acrylatanteil in solchen neuartigen Systemen nachteilig.

Die Ergebnisse und Zusammensetzungen der Initiatorsysteme zu den Beispielen 9 bis 12 finden sich in Tabelle 3. In diesen Beispielen 9 bis 12 wurden größere Mengen der Phosphite eingesetzt.

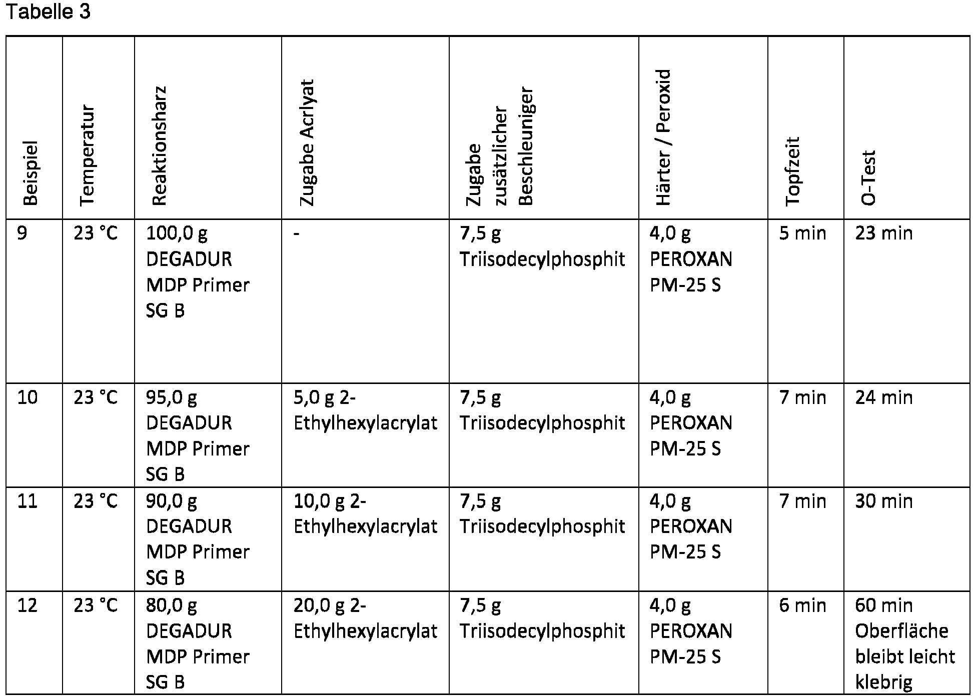

Überraschenderweise wurde in Beispielen 9 bis 12 gefunden, dass durch Verwendung von größeren Einsatzmengen des organischen Phosphits die Härtung auch bei erhöhten Gewichtsanteilen an Acrylatmonomeren vollständig und klebfrei möglich ist.

### Berechnung Anteil Acrylatgruppen in den Zusammensetzungen gemäß Beispielen 5 bis 12

Zur Veranschaulichung sind im Folgenden die gewichtsmäßigen Anteile an Acrylatgruppen im Harzanteil der Beispiele 5 bis 12 berechnet.

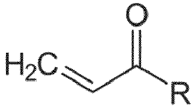

Eine Acrylatgruppe hat ein Äquivalentgewicht von 55,06 g/mol, wodurch sich beispielsweise ein Gewichtsanteil von 29,9 % in 2-Ethylhexylacrylat ergibt (55,06 g/mol / 184,28 g/mol = 29,9 %).

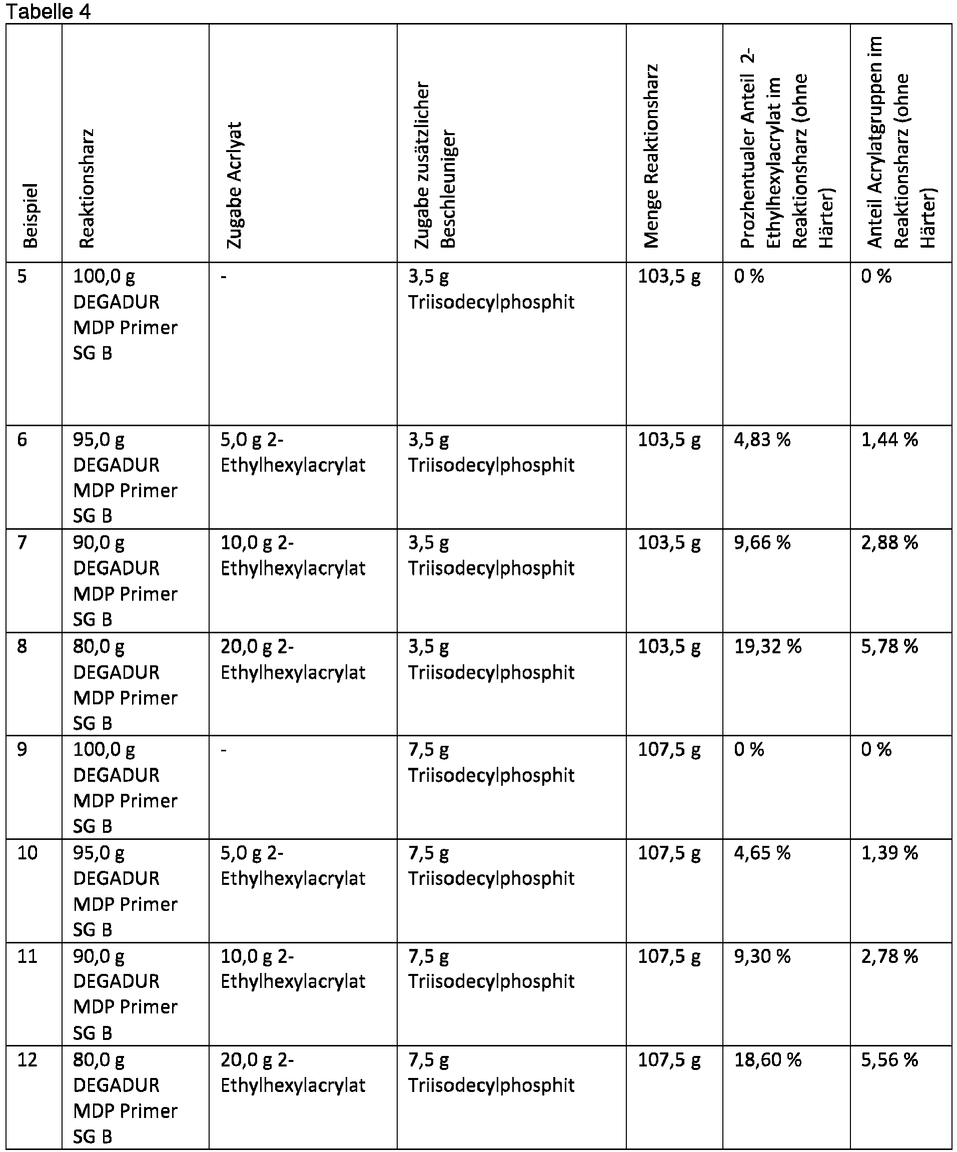

### Beispiel 13

49,0 g Ebecryl 230 (kommerziell erhältliches Urethanacrylat, Firma Allnex) wurden mit 46,2 g Methylmethacrylat, 0,80 g Paraffin (Sasolwax 5105) und 4,0 g Triisodecylphosphit als Beschleuniger bei 55 °C vermischt bis sich das Paraffin vollständig gelöst hatte. Anschließend wurde das Harz auf 23°C abgekühlt.

Zur Härtung wurden 4,0 g PEROXAN PM-25 S (Tert-Butylpermaleinat, 25%, Suspension mit Weichmacher, Firma Pergan) zugegeben und solange gerührt, bis sich das zugegebene Peroxid im Reaktionsharz vollständig aufgelöst hatte. Zusammensetzung und Ergebnisse sind in Tabelle 5 wiedergegeben.

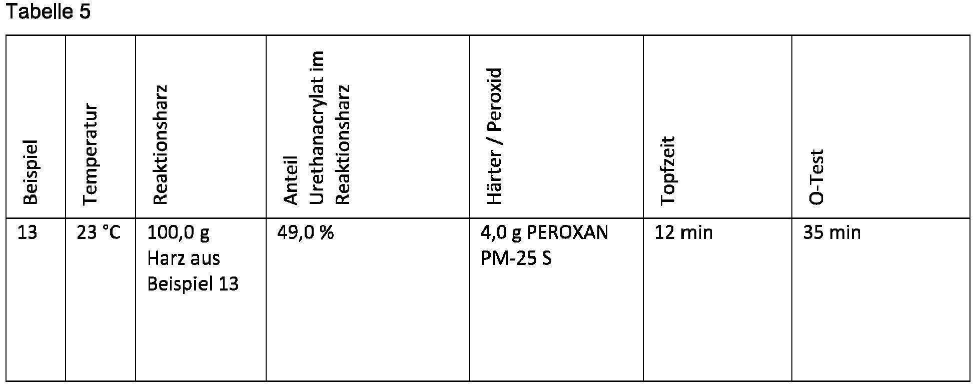

Die Beispiel 13 zeigt, dass nicht der Gewichtsanteil an Acrylatverbindungen für eine klebfreie Aushärtungs relevant ist, sondern der Mengenanteil an funktionellen Acrylatgruppen. So liegen hier hohe Anteile an Acrylatverbindungen in Form von Urethanacrylat vor, aufgrund des gewichtsmäßigen geringen Anteils an funktionellen Acrylatgruppen führt dies jedoch nicht zu einer wesentlichen Beeinträchtigung der Härtung.

## Patentansprüche

1. 2K-Reaktionsharz auf (Meth)acrylatbasis, **dadurch gekennzeichnet, dass** die beiden Komponenten des Reaktionsharzes zusammen
0 Gew% bis 30 Gew% Vernetzer,
20 Gew% bis 85 Gew% Monomere,
0 Gew% bis 60 Gew% Urethan(meth)acrylate,
0 Gew% bis 40 Gew% Präpolymere,
gegebenenfalls weitere Hilfsstoffe und
1,15 Gew% bis 10 Gew% eines Härtersystems bezogen auf das 2K-Reaktionsharz enthaltend
0,15 Gew bis 5 Gew% Permaleinate,
1,0 Gew% bis 10 Gew% eines tertiären organischen Phosphit
als Inhaltsstoffe aufweisen, und dass das oder die Permaleinate einerseits und das tertiäre organische Phosphit andererseits in getrennten Komponenten des 2K-Reaktionsharzes vor dem Zusammenmischen der beiden Komponenten enthalten sind, und dass das tertiäre organische Phosphit die allgemeine Formel P(OR1)(OR2)(OR3) hat, wobei es sich bei R1, R2 und R3 um identische oder um zueinander unterschiedliche Gruppen handelt und mindestens eine dieser Gruppen mehr als 6 C-Atome aufweist.

2. 2K-Reaktionsharz gemäß Anspruch 1, **dadurch gekennzeichnet, dass** die beiden Komponenten des Reaktionsharzes zusammen
2 Gew% bis 20 Gew% mehrfunktionelle (Meth)acrylate,
25 Gew% bis 75 Gew% (Meth)acrylate und/oder mit (Meth)acrylaten copolymerisierbare Monomere, wobei der Anteil an Acrylaten maximal 5 Gew% des 2K-Reaktionsharzes ausmacht,
0 Gew% bis 45 Gew% Urethan(meth)acrylate,
10 Gew% bis 35 Gew% Präpolymere,
gegebenenfalls weitere Hilfsstoffe und
2 Gew% bis 7,5 Gew% eines Härtersystems, enthaltend bezogen auf das 2K-Reaktionsharz 0,5 Gew bis 4,0 Gew% Permaleinate und
1,5 Gew% bis 6,0 Gew% eines tertiären organischen Phosphits, als Inhaltsstoffe aufweist.

3. 2K-Reaktionsharz gemäß Anspruch 1, **dadurch gekennzeichnet, dass** die beiden Komponenten des Reaktionsharzes zusammen
0 Gew% bis 20 Gew% mehrfunktionelle (Meth)acrylate,
25 Gew% bis 75 Gew% (Meth)acrylate und/oder mit (Meth)acrylaten copolymerisierbare Monomere, wobei der Anteil an Acrylaten maximal 5 Gew% des 2K-Reaktionsharzes ausmacht,
10 Gew% bis 60 Gew% Urethan(meth)acrylate,
10 Gew% bis 35 Gew% Präpolymere,
gegebenenfalls weitere Hilfsstoffe und
2 Gew% bis 7,5 Gew% eines Härtersystems, enthaltend bezogen auf das 2K-Reaktionsharz 0,5 Gew bis 4,0 Gew% Permaleinate und
1,5 Gew% bis 6,0 Gew% eines tertiären organischen Phosphits, als Inhaltsstoffe aufweist.

4. 2K-Reaktionsharz gemäß Anspruch 1 oder 2, **dadurch gekennzeichnet, dass** die beiden Komponenten des Reaktionsharzes zusammen
3 Gew% bis 15 Gew% mehrfunktionelle Methacrylate,
30 Gew% bis 40 Gew% (Meth)acrylate und/oder mit (Meth)acrylaten copolymerisierbare Monomere, wobei es sich bezogen auf die Gesamtmenge des 2K-Reaktionsharzes bei maximal 5 Gew% der Monomere um Acrylate handelt,
0 Gew% bis 30 Gew% Urethan(meth)acrylate,
15 Gew% bis 25 Gew% Präpolymere,
gegebenenfalls weitere Hilfsstoffe und
2 Gew% bis 7 Gew% eines Härtersystems enthaltend 0,75 Gew bis 3,5 Gew% Permaleinate,
2,0 Gew% bis 5,0 Gew% eines tertiären organisches Phosphits, als Inhaltsstoffe aufweist.

5. 2K-Reaktionsharz gemäß mindestens einem der Ansprüche 1 bis 4, **dadurch gekennzeichnet, dass** es sich bei dem Permaleinat um tert-Butylmonoperoxomaleinsäureester handelt.

6. 2K-Reaktionsharz gemäß mindestens einem der Ansprüche 1 bis 5, **dadurch gekennzeichnet, dass** es sich bei dem tertiären organischen Phosphit um Triisodecylphosphit handelt.

7. 2K-Reaktionsharz gemäß mindestens einem der Ansprüche 1 bis 6, **dadurch gekennzeichnet, dass** das 2K-Reaktionsharz kein Amin enthält.

8. 2K-Reaktionsharz gemäß mindestens einem der Ansprüche 1 bis 7, **dadurch gekennzeichnet, dass** das 2K-Reaktionsharz keine Acrylate enthält.

9. 2K-Reaktionsharz gemäß mindestens einem der Ansprüche 1 bis 8, **dadurch gekennzeichnet, dass** die zweite Komponente des Reaktionsharzes ausschließlich aus Bestandteilen des Härtersystems besteht, die nicht in der ersten Komponente enthalten sind.

10. 2K-Reaktionsharz gemäß mindestens einem der Ansprüche 1 bis 9, **dadurch gekennzeichnet, dass** die erste und die zweite Komponente des Reaktionsharzes mit Ausnahme der Bestandteile des Härtersystems identisch zusammengesetzt sind.

11. 2K-Reaktionsharz gemäß mindestens einem der Ansprüche 1 bis 10, **dadurch gekennzeichnet, dass** das Reaktionsharz 0,3 Gew% bis 3 Gew% eines oder mehrerer Paraffine, deren Erstarrungspunkt nach DIN-ISO 2207 im Temperaturbereich von 35 °C bis 75 °C liegt, enthält.

12. 2K-Reaktionsharz gemäß mindestens einem der Ansprüche 1 bis 11, **dadurch gekennzeichnet, dass** das 2K-Reaktionsharz bezogen auf die Summe aus Acrylat- und Methacrylatgruppen maximal 5 Gew% Acrylat-Gruppen enthält.

13. Verfahren zur Applizierung eines 2K-Reaktionsharzes, **dadurch gekennzeichnet, dass** die beiden Komponenten eines Reaktionsharzes gemäß mindestens einem der Ansprüche 1 bis 12 innerhalb von 2 min bis 40 min vor oder während dem Auftragen auf einem Substrat miteinander vermischt werden.

14. Verfahren gemäß Anspruch 13, **dadurch gekennzeichnet, dass** es sich bei dem Substrat um eine Fahrbahnoberfläche, Pflastersteine, Beton, Estrich, Asphalt, Keramik oder Stahl, insbesondere in Form eines Stahlträgers, handelt.

15. Kaltplastik zur Verwendung als Fahrbahnmarkierung, Abdichtung oder Bodenbeschichtung,
**dadurch gekennzeichnet,**
**dass** die Kaltplastik
5 Gew% bis 80 Gew% des 2K-Reaktionsharzes gemäß einem der Ansprüche 1 bis 12,
0,15 Gew% bis 25 Gew% eines oder mehrerer Pigment,
15 Gew% bis 90 Gew% anorganische Füllstoffe
0 Gew% bis 5 Gew% nicht im 2K-Reaktionsharz enthaltener weiterer Stabilisatoren und/oder Additive und
0 Gew% bis 90 Gew% organische Füllstoffe als Bestandteile aufweist.

16. Kaltplastik gemäß Anspruch 15 **dadurch gekennzeichnet,**
**dass** die Kaltplastik
10 Gew% bis 60 Gew% des 2K-Reaktionsharzes gemäß einem der Ansprüche 1 bis 11,
1,5 Gew% bis 15 Gew% eines oder mehrerer anorganische Pigmente, bevorzugt Titandioxid,
0,3 Gew% bis 3 Gew% nicht im 2K-Reaktionsharz enthaltener weiterer Stabilisatoren und/oder Additive und
50 Gew% bis 80 Gew% anorganische Füllstoffe und organische Füllstoffe in Summe, wobei es sich bei den organischen Füllstoffen um Polymere handelt,
als Bestandteile aufweist.

## Claims

1. (Meth)acrylate-based 2K reaction resin, **characterized in that** the two components of the reaction resin together contain
0% by weight to 30% by weight of crosslinkers,
20% by weight to 85% by weight of monomers,
0% by weight to 60% by weight of urethane (meth)acrylates,
0% by weight to 40% by weight of prepolymers, optionally further auxiliaries and
1.15% by weight to 10% by weight of a curing system based on the 2K reaction resin containing 0.15% by weight to 5% by weight of permaleinates,
1.0% by weight to 10% by weight of a tertiary organic phosphite as ingredients, and **in that** the permaleinate(s) on the one hand and the tertiary organic phosphite on the other are contained in separate components of the 2K reaction resin before the two components are mixed together, and **in that** the tertiary organic phosphite has the general formula P(OR1) (OR2) (OR3), wherein R1, R2 and R3 are identical or are groups differing from one another and at least one of these groups has more than 6 C atoms.

2. 2K reaction resin according to Claim 1, **characterized in that** the two components of the reaction resin together contain
2% by weight to 20% by weight of multifunctional (meth)acrylates,
25% by weight to 75% by weight of (meth)acrylates and/or monomers copolymerisable with (meth)acrylates, wherein the content of acrylates is a maximum of 5% by weight of the 2K reaction resin,
0% by weight to 45% by weight of urethane (meth)acrylates,
10% by weight to 35% by weight of prepolymers, optionally further auxiliaries and
2% by weight to 7.5% by weight of a curing system containing, based on the 2K reaction resin, 0.5% by weight to 4.0% by weight of permaleinates and
1.5% by weight to 6.0% by weight of a tertiary organic phosphite as ingredients.

3. 2K reaction resin according to Claim 1, **characterized in that** the two components of the reaction resin together contain
0% by weight to 20% by weight of multifunctional (meth)acrylates,
25% by weight to 75% by weight of (meth)acrylates and/or monomers copolymerisable with (meth)acrylates, wherein the content of acrylates is a maximum of 5% by weight of the 2K reaction resin,
10% by weight to 60% by weight of urethane (meth)acrylates,
10% by weight to 35% by weight of prepolymers, optionally further auxiliaries and
2% by weight to 7.5% by weight of a curing system containing, based on the 2K reaction resin, 0.5% by weight to 4.0% by weight of permaleinates and
1.5% by weight to 6.0% by weight of a tertiary organic phosphite as ingredients.

4. 2K reaction resin according to Claim 1 or 2, **characterized in that** the two components of the reaction resin together contain
3% by weight to 15% by weight of multifunctional methacrylates,
30% by weight to 40% by weight of (meth)acrylates and/or monomers copolymerisable with (meth)acrylates, wherein based on the total amount of the 2K reaction resin, a maximum of 5% by weight of the monomers are acrylates,
0% by weight to 30% by weight of urethane (meth)acrylates,
15% by weight to 25% by weight of prepolymers, optionally further auxiliaries and
2% by weight to 7% by weight of a curing system containing 0.75% by weight to 3.5% by weight of permaleinates and
2.0% by weight to 5.0% by weight of a tertiary organic phosphite as ingredients.

5. 2K reaction resin according to at least one of Claims 1 to 4, **characterized in that** the permaleinate is tert-butyl monoperoxomaleic acid ester.

6. 2K reaction resin according to at least one of Claims 1 to 5, **characterized in that** the tertiary organic phosphite is triisodecyl phosphite.

7. 2K reaction resin according to at least one of Claims 1 to 6, **characterized in that** the 2K reaction resin contains no amine.

8. 2K reaction resin according to at least one of Claims 1 to 7, **characterized in that** the 2K reaction resin contains no acrylates.

9. 2K reaction resin according to at least one of Claims 1 to 8, **characterized in that** the second component of the reaction resin consists exclusively of components of the curing system that are not contained in the first component.

10. 2K reaction resin according to at least one of Claims 1 to 9, **characterized in that** the first and the second component of the reaction resin have identical compositions, with the exception of the components of the curing system.

11. 2K reaction resin according to at least one of Claims 1 to 10, **characterized in that** the reaction resin contains 0.3% by weight to 3% by weight of one or more paraffins, the congealing point of which according to DIN-ISO 2207 is in the temperature range of 35°C to 75°C.

12. 2K reaction resin according to at least one of Claims 1 to 11, **characterized in that** the 2K reaction resin, based on the total of acrylate and methacrylate groups, contains a maximum of 5% by weight of acrylate groups.

13. Method for application of a 2K reaction resin, **characterized in that** the two components of a reaction resin according to at least one of Claims 1 to 12, within 2 min to 40 min before or during application, are mixed with each other on a substrate.

14. Method according to Claim 13, **characterized in that** the substrate is a roadway, paving stones, concrete, screed, asphalt, ceramic or steel, particularly in the form of a steel girder.

15. Cold plastic for use as a road marking, seal or floor coating, **characterized in that**
the cold plastic contains
5% by weight to 80% by weight of the 2K reaction resin according to any of Claims 1 to 12,
0.15% by weight to 25% by weight of one or more pigment,
15% by weight to 90% by weight of inorganic fillers,
0% by weight to 5% by weight of further stabilisers and/or additives not contained in the 2K reaction resin and
0% by weight to 90% by weight of organic fillers as components.

16. Cold plastic according to Claim 15, **characterized in that**
the cold plastic contains
10% by weight to 60% by weight of the 2K reaction resin according to any of Claims 1 to 11,
1.5% by weight to 15% by weight of one or more inorganic pigments, preferably titanium dioxide,
0.3% by weight to 3% by weight of further stabilisers and/or additives not contained in the 2K reaction resin and
50% by weight to 80% by weight of inorganic fillers and organic fillers in total, wherein the organic fillers are polymers,
as components.

## Revendications

1. Résine réactive bi-composant à base de (méth)acrylate, **caractérisée en ce que** les deux composants de la résine réactive présentent ensemble en tant qu'ingrédients
0 % en poids à 30 % en poids d'agent de réticulation
20 % en poids à 85 % en poids de monomères,
0 % en poids à 60 % en poids de (méth)acrylates d'uréthane,
0 % en poids à 40 % en poids de prépolymères,
le cas échéant d'autres agents auxiliaires et
1,15 % en poids à 10 % en poids d'un système de durcisseur par rapport à la résine réactive bi-composant contenant 0,15 % en poids à 5 % en poids de permaléinates,
1,0 % en poids à 10 % en poids d'un phosphite organique tertiaire, et **en ce que** le(s) permaléinate(s) d'une part et le phosphite organique tertiaire d'autre part sont contenus dans des composants distincts de la résine réactive bi-composant avant le mélange des deux composants, et **en ce que** le phosphite organique tertiaire a la formule générale P(ORL) (OR2) (OR3), dans laquelle R1, R2 et R3 sont des groupes identiques ou différents et au moins un de ces groupes comporte plus de 6 atomes de carbone.

2. Résine réactive bi-composant selon la revendication 1, **caractérisée en ce que** les deux composants de la résine réactive présentent ensemble en tant qu'ingrédients
2 % en poids à 20 % en poids de (méth)acrylates multifonctionnels,
25 % en poids à 75 % en poids de (méth)acrylates et/ou de monomères copolymérisables avec des (méth)acrylates, la proportion d'acrylates représentant au maximum 5 % en poids de la résine réactive bi-composant,
0 % en poids à 45 % en poids de (méth)acrylates d'uréthane,
10 % en poids à 35 % en poids de prépolymères,
le cas échéant d'autres agents auxiliaires et
2 % en poids à 7,5 % en poids d'un système durcisseur contenant, par rapport à la résine réactive bi-composant, 0,5 % en poids à 4,0 % en poids de permaléinates et
1,5 % en poids à 6,0 % en poids d'un phosphite organique tertiaire.

3. Résine réactive bi-composant selon la revendication 1, **caractérisée en ce que** les deux composants de la résine réactive représentent ensemble en tant qu'ingrédients
0 % en poids à 20 % en poids de (méth)acrylates multifonctionnels,
25 % en poids à 75 % en poids de (méth)acrylates et/ou de monomères copolymérisables avec des (méth)acrylates, la proportion d'acrylates représentant au maximum 5 % en poids de la résine réactive bi-composant,
10 % en poids à 60 % en poids de (méth)acrylates d'uréthane,
10 % en poids à 35 % en poids de prépolymères,
le cas échéant d'autres agents auxiliaires et
2 % en poids à 7,5 % en poids d'un système durcisseur contenant, par rapport à la résine réactive bi-composant, 0,5 % en poids à 4,0 % en poids de permaléinates et
1,5 % en poids à 6,0 % en poids d'un phosphite organique tertiaire.

4. Résine réactive bi-composant selon la revendication 1 ou 2, **caractérisée en ce que** les deux composants de la résine réactive représentent ensemble en tant qu'ingrédients
3 % en poids à 15 % en poids de méthacrylates multifonctionnels,
30 % en poids à 40 % en poids de (méth)acrylates et/ou de monomères copolymérisables avec des (méth)acrylates, 5 % en poids de monomères maximum étant des acrylates par rapport à la quantité totale de résine réactive bicomposant,
0 % en poids à 30 % en poids de (méth)acrylates d'uréthane,
15 % en poids à 25 % en poids de prépolymères,
le cas échéant d'autres agents auxiliaires et
2 % en poids à 7 % en poids d'un système durcisseur contenant 0,75 % en poids à 3,5 % en poids de permaléinates,
2,0 % en poids à 5,0 % en poids d'un phosphite organique tertiaire.

5. Résine réactive bi-composant selon au moins l'une quelconque des revendications 1 à 4, **caractérisée en ce que** le permaléinate est un ester d'acide tert-butyl monoperoxomaléique.

6. Résine réactive bi-composant selon au moins l'une quelconque des revendications 1 à 5, **caractérisée en ce que** le phosphite organique tertiaire est le phosphite de triisodécyle.

7. Résine réactive bi-composant selon au moins l'une quelconque des revendications 1 à 6, **caractérisée en ce que** la résine réactive bi-composant ne contient pas d'amine.

8. Résine réactive bi-composant selon au moins l'une quelconque des revendications 1 à 7, **caractérisée en ce que** la résine réactive bi-composant ne contient pas d'acrylates.

9. Résine réactive bi-composant selon au moins l'une quelconque des revendications 1 à 8, **caractérisée en ce que** le second composant de la résine réactive est exclusivement constitué de composants du système durcisseur qui ne sont pas contenus dans le premier composant.

10. Résine réactive bi-composant selon au moins l'une quelconque des revendications 1 à 9, **caractérisée en ce que** les premier et second composants de la résine réactive sont composés de façon identique à l'exception des composants du système durcisseur.

11. Résine réactive bi-composant selon au moins l'une quelconque des revendications 1 à 10, **caractérisée en ce que** la résine réactive contient 0,3 % en poids à 3 % en poids d'une ou plusieurs paraffines dont le point de solidification selon la norme DIN ISO 2207 se situe dans la plage de températures de 35 °C à 75 °C.

12. Résine réactive bi-composant selon au moins l'une quelconque des revendications 1 à 11, **caractérisée en ce que** la résine réactive bi-composant contient 5 % en poids maximum de groupes acrylate par rapport au total des groupes acrylate et méthacrylate.

13. Procédé d'application d'une résine réactive bi-composant, **caractérisé en ce que** les deux composants d'une résine réactive selon au moins l'une quelconque des revendications 1 à 12 sont mélangés ensemble dans les 2 minutes à 40 minutes avant ou pendant l'application sur un substrat.

14. Procédé selon la revendication 13, **caractérisé en ce que** le substrat est une surface de roulement, des pavés, du béton, une chape, de l'asphalte, de la céramique ou de l'acier, en particulier sous la forme d'une poutre en acier.

15. Plastique à froid destiné à être utilisé comme marquage routier, scellement ou revêtement de sol, **caractérisé en ce que** le plastique à froid présente, en tant que composants,
5 % en poids à 80 % en poids de la résine réactive bi-composant selon l'une quelconque des revendications 1 à 12,
0,15 % en poids à 25 % en poids d'un ou plusieurs pigments,
15 % en poids à 90 % en poids de charges inorganiques 0 % en poids à 5 % en poids d'autres stabilisants et/ou additifs non contenus dans la résine réactive bi-composant et
0 % en poids à 90 % en poids de charges organiques.

16. Plastique à froid selon la revendication 15, **caractérisé en ce que** le plastique à froid présente, en tant que composants,
10 % en poids à 60 % en poids de la résine réactive bi-composant selon l'une quelconque des revendications 1 à 11,
1,5 % en poids à 15 % en poids d'un ou plusieurs pigments inorganiques, de préférence du dioxyde de titane,
0,3 % en poids à 3 % en poids d'autres stabilisants et/ou additifs non contenus dans la résine réactive bi-composant et
50 % en poids à 80 % en poids de charges inorganiques et de charges organiques au total, les charges organiques étant des polymères.
